Europäisches Patentamt

European Patent Office

Office européen des brevets

(19)

(11) **EP 0 580 462 B1**

(12) **FASCICULE DE BREVET EUROPEEN**

(45) Date de publication et mention
de la délivrance du brevet:
**30.07.1997 Bulletin 1997/31**

(51) Int Cl.$^6$: **G01D 3/028**, G01L 19/04,
G01L 27/00

(21) Numéro de dépôt: **93401507.4**

(22) Date de dépôt: **11.06.1993**

(54) **Procédé et dispositif pour la correction des erreurs thermiques d'acquisition de grandeurs électriques**

Verfahren und Vorrichtung zum korrigieren thermischer Fehler beim Erfassen von elektrischen Parametern

Process and device for the correction of thermal errors in the acquisition of electric parameters

(84) Etats contractants désignés:
**DE GB IT**

(30) Priorité: **21.07.1992 FR 9208974**

(43) Date de publication de la demande:
**26.01.1994 Bulletin 1994/04**

(73) Titulaire: **SEXTANT AVIONIQUE**
**F-92366 Meudon la Forêt Cédex (FR)**

(72) Inventeur: **Taurand, Christophe**
**F-26000 Valence (FR)**

(74) Mandataire: **de Saint-Palais, Arnaud Marie et al**
**CABINET MOUTARD**
**35, Avenue Victor Hugo**
**78960 Voisins le Bretonneux (FR)**

(56) Documents cités:
WO-A-89/03019          DE-A- 2 714 384
GB-A- 2 125 565        GB-A- 2 221 039

## Description

La présente invention concerne un procédé et un dispositif pour corriger les erreurs d'acquisition de grandeurs électriques par autocalibration initiale et correction par modèle de compensation thermique.

Elle s'applique notamment, mais non exclusivement, à la numérisation en continu de signaux destinés à la navigation provenant par exemple de gyromètres, d'accéléromètres, de magnétomètres et de capteurs de pression, etc...

Ces signaux issus des capteurs sont généralement associés à une information de température destinée à modéliser le comportement thermique desdits capteurs.

On sait que de tels systèmes utilisent le plus souvent des systèmes de numérisation de type intégrateur (convertisseur tension ou intensité/fréquence associé à un compteur ou convertisseur $\Sigma\Delta$ ou convertisseurs multiples rampes).

Les applications de ce genre, qui exigent une grande précision au niveau des mesures, nécessitent l'emploi de composants électroniques de haute précision, ayant une grande stabilité à long terme et présentant de faibles dérives thermiques. Pour arriver à de telles performances, on doit, soit :

- Faire usage de procédures de calibration de cette électronique d'acquisition. Une solution consiste à effectuer une autocalibration cyclique de chaque voie d'acquisition, ce qui conduit à utiliser une voie de substitution prenant le relais de la voie d'acquisition en cours d'autocalibration et permettant d'assurer la continuité de la mesure sur toutes les voies.

Toutefois, cette solution exige un nombre de composants plus élevé (de par la présence de la voie de substitution) et peut conduire à des perturbations lors des commutations entre voies d'acquisition et de substitution, en particulier si le système est soumis à des variations de température.

- Créer un modèle de compensation thermique des erreurs pour l'électronique d'acquisition. L'inconvénient de cette méthode dont des variantes se trouvent décrites dans les documents WO 89/03019, DE 27 14 384 et GB 2 221 039 est que le vieillissement des composants fausse le modèle de compensation thermique ce qui diminue de beaucoup l'efficacité de cette correction d'erreur.

En vue de supprimer ces inconvénients, l'invention propose un procédé pour la correction des erreurs thermiques dans un circuit électrique servant à l'acquisition d'un signal électrique représentatif d'une grandeur physique à mesurer et délivrée à la sortie d'un premier capteur associé à un convertisseur analogique-numérique, ce circuit électrique comprenant un capteur de température, une première et seconde générateur de tension de référence et un microcontrôleur équipé d'une mémoire de calibration, le microcontrôleur commandant une phase de calibration comprenant une pluralité d'étapes de calibration réalisées pour différentes valeurs de température en vue de l'élaboration de la mémorisation d'un modèle de variation thermique, puis une phase opératoire comprenant l'application de la tension de sortie du premier capteur à l'entrée du circuit d'acquisition, la mémorisation de cette tension et la correction de la valeur numérique obtenue grâce au modèle de variation thermique précédemment mémorisé.

Selon l'invention, ce procédé est caractérisé en ce que la phase de calibration s'effectue en usine, préalablement à l'utilisation du circuit électrique, chaque étape de calibration comportant la stabilisation du circuit à une certaine température, l'application à l'entrée du premier convertisseur analogique-numérique respectivement d'un second convertisseur analogique-numérique associé au capteur de température de la première tension de référence servant à identifier les dérives d'offset, de la seconde tension de référence servant à identifier les dérives de pleine échelle, de la tension de sortie du premier capteur et de la tension de sortie du capteur de température, puis la détermination et la mémorisation d'un modèle de variation des valeurs numériques desdites tensions, et en ce que le procédé comprend en outre une phase d'initialisation exécutée à chacune des mises en service du circuit d'acquisition, cette phase comprenant :

- le débiaisage de l'offset des convertisseurs par application sur ces convertisseurs de la première tension de référence,
- le débiaisage de la pleine échelle des convertisseurs par application sur ces convertisseurs de la tension de référence, et
- le recalage des différents modèles thermiques en fonction de la température détectée par le capteur de température.

Bien entendu, le procédé précédemment décrit pourra en outre comprendre une autocalibration cyclique au cours de la phase opératoire, chaque phase d'autocalibration comprenant l'application de stimuli à l'entrée du circuit d'acquisition, la détermination, en réponse à ces stimuli, des paramètres caractéristiques de la fonction de transfert du circuit d'acquisition et la détermination de ladite fonction de transfert à partir desdits paramètres, puis grâce à la température, le recalage des différents modèles thermiques.

Une fois la phase d'autocalibration effectuée, le signal d'entrée est à nouveau appliqué sur ledit circuit qui effectue alors une conversion en tenant compte de la fonction de transfert précédemment déterminée.

Un mode d'exécution de l'invention sera décrit ci-après, à titre d'exemple non limitatif, avec référence aux dessins annexés dans lesquels :

La figure 1 est un schéma synoptique d'un dispositif pour l'acquisition en continu d'un signal analogique représentatif d'une pression ;

La figure 2 est un tableau illustrant le mode de commande du multiplexeur utilisé dans le circuit représenté figure 1 ;

La figure 3 est une représentation schématique d'une installation permettant d'exécuter la phase de modélisation préalable du dispositif ;

La figure 4 est un diagramme de température en fonction du temps illustrant un cycle de variation de température utilisé pour la modélisation du dispositif ;

La figure 5 est un détail à plus grande échelle du diagramme de la figure 4 ;

Les figures 6 et 7 sont des diagrammes montrant les relevés expérimentaux effectués pour un paramètre (figure 6) et le modèle thermique qui lui est associé (figure 7) ;

La figure 8 est un diagramme montrant un modèle corrigé à partir d'un modèle mis en mémoire (recalage) ;

La figure 9 est un diagramme montrant des variations du modèle thermique, pour un démarrage à froid, pour un démarrage à température ambiante, et pour un démarrage à chaud d'un convertisseur disposant de sa propre autocalibration interne au démarrage (minimisation des erreurs à la température de démarrage).

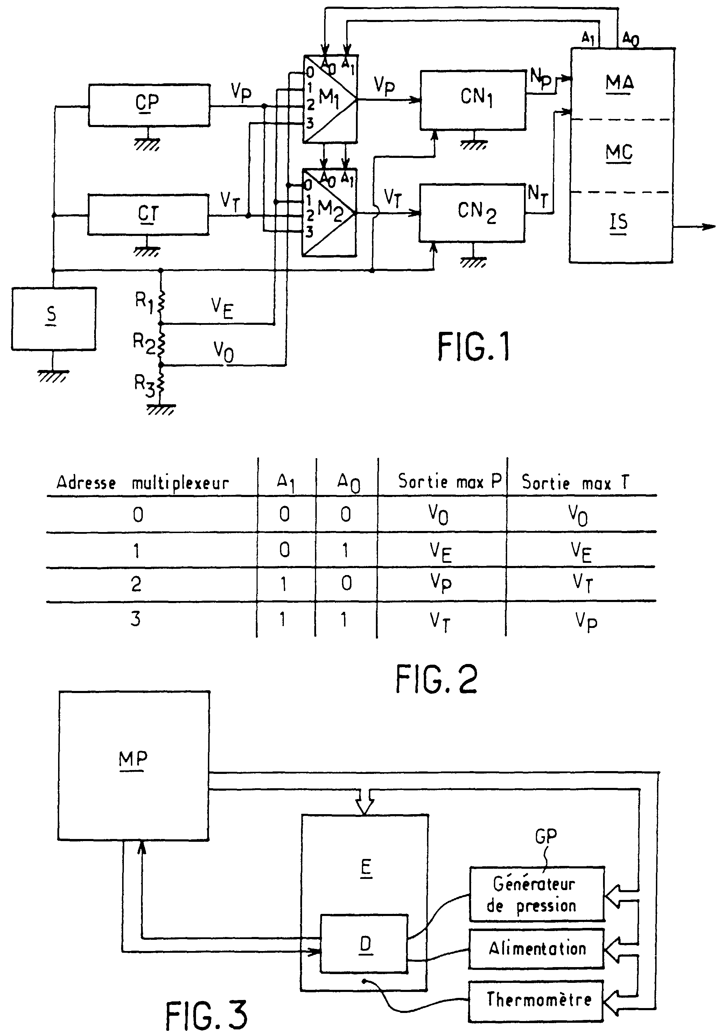

Dans l'exemple représenté sur la figure 1, le dispositif est destiné à effectuer l'acquisition de valeurs de pression délivrées sous forme d'une tension analogique $V_P$ par un capteur de pression CP.

Ce capteur CP, qui est alimenté par une source de tension calibrée S, est relié par sa sortie à l'entrée d'un convertisseur analogique/numérique par l'intermédiaire d'un multiplexeur M1. Le convertisseur CN1 numérise cette tension en une grandeur numérique NP. Le résultat NP de cette conversion est appliqué à l'entrée d'un microcontrôleur d'acquisition et de traitement MA disposant d'une mémoire de calibration MC et d'un interface de sortie IS délivrant un signal numérique représentatif de la pression détectée. Comme cela sera expliqué dans la suite, la mémoire de calibration MC sert à sauvegarder le comportement thermique du système. Cette mémoire est généralement du type EPROM, EEPROM ou RAM sauvegardée.

Pour permettre la compensation des dérives thermiques du capteur CP et des convertisseurs CN1 et CN2, ce dispositif fait intervenir un capteur de température CT également alimenté par le générateur de tension calibrée S et dont la tension analogique de sortie $V_T$ est appliquée à un convertisseur analogique/numérique CN2 d'un type similaire au convertisseur CN1 par l'intermédiaire d'un multiplexeur M2.

La sortie de ce convertisseur CN2 est également reliée à l'entrée du microcontrôleur MA.

Les multiplexeurs M1 et M2 sont commandés par le microcontrôleur grâce à un circuit de commande à deux signaux d'adresse $A_0$, $A_1$.

Ils comprennent quatre entrées, à savoir :

- une entrée 0 sur laquelle est appliquée une première tension de référence $V_o$, obtenue par un pont de résistances R1 à R3 monté entre les deux bornes du générateur de tension de référence S, cette tension étant proche de zéro et servant à identifier les dérives d'Offset,

- une entrée 1 sur laquelle est appliquée une deuxième tension de référence $V_E$ obtenue au moyen dudit pont : cette tension $V_E$, qui est voisine de la tension calibrée engendrée par le générateur, sert à identifier les dérives de pleine échelle du dispositif,

- une entrée 2 sur laquelle est appliquée la tension $V_P$ engendrée par le capteur de pression CP, pour ce qui concerne le multiplexeur M1 et la tension $V_T$ engendrée par le capteur de température CT, pour ce qui concerne le multiplexeur M2,

- une entrée 3 sur laquelle est appliquée la tension $V_T$ pour ce qui concerne le multiplexeur M1 et la tension $V_P$ pour ce qui concerne le multiplexeur M2.

Le principe de la commande de ces multiplexeurs M1, M2 résulte du tableau représenté sur la figure 2 dans lequel on a indiqué en correspondance, l'adresse du multiplexeur, l'état des voies A1, A0 et la nature des sorties des multiplexeurs M1 et M2.

Le principe de mesure, tant en ce qui concerne la pression que la température est ratiométrique, les convertisseurs CN1 et CN2 fournissant une information proportionnelle à la tension calibrée V (de référence) fournie par le générateur s (laquelle est utilisée par les convertisseurs). Les tensions $V_o$ et $V_E$ sont également ratiométriques de par leur fabrication à partir de la tension calibrée V et du pont de résistances R1, R2, R3. Les valeurs de R1, R2 et R3 sont choisies de telle façon que les convertisseurs CN1 et CN2 ne saturent pas si on leur applique les tensions $V_o$ ou $V_E$ sur l'intégralité de la gamme de température d'utilisation.

Les objectifs de l'architecture du dispositif précédemment décrit sont essentiellement :

- de minimiser les erreurs dues à l'électronique de conversion,
- de détecter les dérives thermiques et à long terme de cette électronique,
- de pouvoir faire une modélisation thermique de composants autocalibrés en interne au démarrage (convertisseur $\Sigma\Delta$ par exemple, ...),
- d'augmenter le taux de détection de panne du système.

Conformément au procédé selon l'invention, préalablement à son utilisation, ce dispositif fait l'objet d'une phase de calibration en usine pour déterminer les modèles de variation thermique des différentes grandeurs au sein du circuit.

A cet effet, on dispose le dispositif (bloc D, fig. 3) à l'intérieur d'une enceinte thermique E à température contrôlée, le capteur de pression CP étant soumis à la pression engendrée par un générateur de pression GP, à pression variable.

La température de l'enceinte ainsi que la pression appliquée sur le capteur de pression sont commandées par un calculateur MP qui est couplé au microcontrôleur.

Ce calculateur est programmé de manière à ordonner un cycle de variation de température en palier, et un cycle de mesure de pressions pour chacun de ces paliers, une fois que la température de ce palier s'est stabilisée.

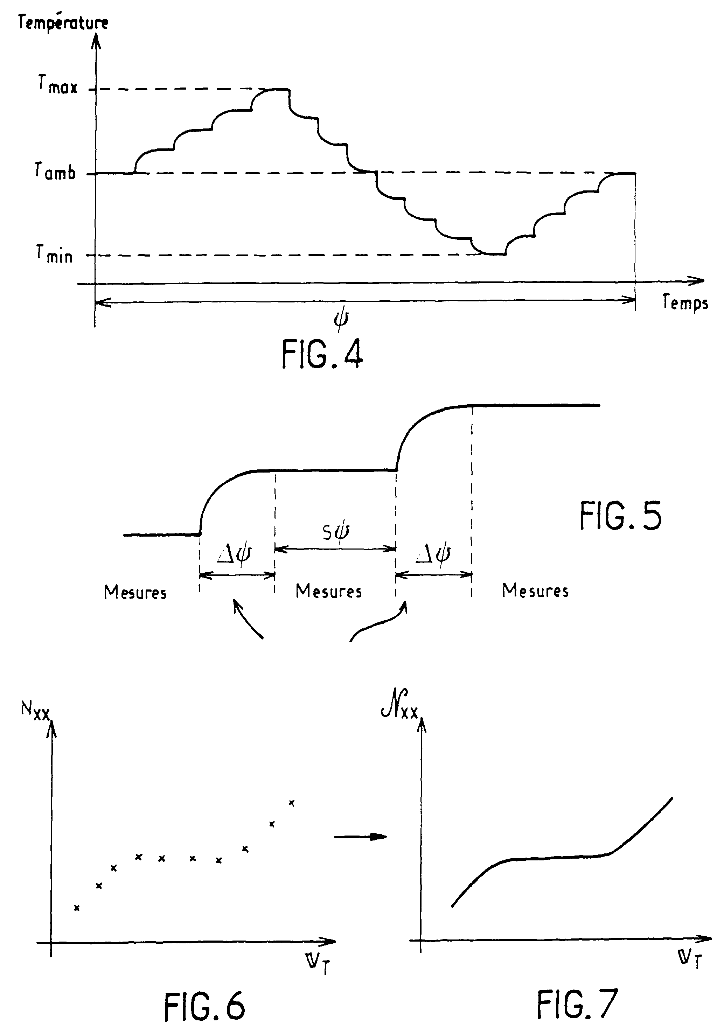

Dans l'exemple représenté sur la figure 4, la courbe de température en fonction du temps (qui comprend une succession de paliers) prend la forme d'un cycle de période $\psi$, la température allant d'une température minimale $T_{min}$ à une température maximale $T_{max}$ et étant égale à la température ambiante $T_{amb}$ en début et en fin de période $\psi$.

Comme on peut le voir sur la figure 5, chaque palier comprend, à la suite de la transmission d'une nouvelle consigne de température, une phase transitoire $\Delta\psi$ de variation de température suivie d'une phase de stabilisation à la température de consigne. Les mesures de pression et de température sont ensuite effectuées pendant une phase suivante $S\psi$ au cours de laquelle température s'est stabilisée. Ces mesures sont aussi bien destinées à la modélisation de l'électronique du dispositif qu'à la modélisation des capteurs.

Pour effectuer la modélisation de l'électronique du dispositif, le calculateur commande les étapes suivantes :

- l'application grâce aux multiplexeurs de la tension $V_o$ sur les convertisseurs CP et CT et la lecture des informations numériques $N_{Po}$ et $N_{To}$ délivrées par ces convertisseurs,

- l'application sur les convertisseurs CN1 et CN2 de la tension $V_E$ et lecture par le microcontrôleur des informations numériques $N_{PE}$ et $N_{TE}$ correspondant à ces tensions,

- l'application sur les convertisseurs CN1 et CN2 des tensions respectives $V_P$ et $V_T$ et lecture par le microcontrôleur des informations numériques correspondantes $N_{PP}$ et $N_{PT}$,

- l'application éventuelle sur les convertisseurs CN1 et CN2 des tensions respectives $V_T$ et $V_P$ pour vérifier la cohérence entre les deux convertisseurs.

Les valeurs débiaisées $N_P$ et $N_T$ des informations délivrées par les convertisseurs CP et CT ont alors pour expression :

$$N_P = \frac{N_{PP} - N_{PO}}{N_{PE} - N_{PO}} \qquad N_T = \frac{N_{TT} - N_{TO}}{N_{TE} - N_{TO}}$$

Les valeurs $V_P$ et $V_T$ débiaisées des tensions appliquées sur les convertisseurs auront quant à elles pour expression :

$$V_P = V_O + (V_E - V_O) \times N_P \qquad V_T = V_O + (V_E - V_O) \times N_T$$

Une fois ces valeurs déterminées, la phase suivante consiste en la création d'un modèle thermique (fonction continue de la température) à partir des mesures expérimentales relevées, à savoir, pour chaque palier, les valeurs $N_{Po}$, $N_{PE}$, $N_{To}$, $N_{TE}$ et $V_{TT}$.

Ces mesures permettent d'obtenir des relevés du type de celui illustré figure 6 à partir duquel on détermine le modèle thermique visible sur la figure 7.

Le calcul et la nature des modèles peuvent différer suivant les applications.

On peut notamment effectuer des approximations, par segment de droite ou de parabole, voire même effectuer des approximations polynomiales ou exponentiels ou logarithmiques, par des méthodes telles que la méthode d'approximation par les moindres carrés, etc...

Pour les deux convertisseurs, on dispose donc de quatre modèles

$$f_{PO} (V_T), \ f_{PE} (V_T), \ f_{TO} (V_T), \ f_{TE} (V_T)$$

qui estiment les variations d'Offset et de pleine échelle en fonction d'une information de température $V_T$.

Pour effectuer la modélisation du capteur de température CT, à chaque palier de température, on fait un relevé de la température de référence $\theta_i$, par exemple à l'aide d'un thermomètre étalon de manière à créer un modèle

$$g (V_T)$$

faisant une estimation de la température externe.

De même, pour effectuer la modélisation du capteur de pression CP, à chaque palier de température, on applique une série de stimuli de pressions de référence $P_{i,j}$ et on fait un relevé des informations pression et température $V_{Pi,j}$ et on fait un relevé des informations pression et température $V_{Pi,j}$ et $T_{i,j}$. Cela permet de créer un modèle

$$h (V_P, V_T)$$

faisant une estimation de la pression.

Une fois tous ces modèles calculés, on peut les introduire dans la mémoire de calibration MC du dispositif et commencer une exploitation normale de ce dernier.

Conformément au procédé précédemment décrit, à chaque mise sous tension, le microcontrôleur MA commande une séquence d'initialisation comprenant les opérations suivantes :

- la mise en route de l'électronique avec éventuellement l'autocalibration interne de certains composants,

- le débiaisage de l'Offset des convertisseurs CN1, CN2 par application de la tension $V_o$ sur les convertisseurs CN1, CN2 de manière à obtenir les valeurs numériques $N_{POPU}$ et $N_{TOPU}$, (le terme PU ("Power Up") indiquant que c'est la première valeur lue), et

- le débiaisage de la pleine échelle des convertisseurs CN1, CN2, par application de la tension de référence $V_E$ sur ces convertisseurs CN1, CN2 de manière à obtenir les valeurs $N_{PEPU}$ et $N_{TEPU}$.

On applique ensuite les tensions $V_P$ et $V_T$ provenant des capteurs sur les convertisseurs CN1, CN2 de manière à obtenir les valeurs numériques $N_{PPPU}$ et $N_{TTPU}$.

Le microcalculateur MA procède ensuite à la vérification du bon fonctionnement du dispositif et à l' acquisition temps réel des valeurs numériques $N_{PP}$ et $N_{TT}$ qui, grâce aux modèles précédemment élaborés permettent de calculer les grandeurs $P$ et $T$.

Le microcalculateur vérifie que les valeurs $N_{POPU}$, $N_{TOPU}$ - $N_{PEPU}$, $N_{TEPU}$ - $N_{PPPU}$ et $N_{TTPU}$ sont dans des limites convenables (sinon déclaration de panne), détermine les facteurs correctifs à appliquer sur les modèles en mémoire et vérifie leur stabilité (cas des composants non autocalibrés en interne). En effet, le modèle en mémoire peut présenter un décalage par rapport au comportement réel du montage. L'autocalibration initiale permet de mesurer ce décalage et de le compenser ou de déclarer le montage comme ayant trop vieilli.

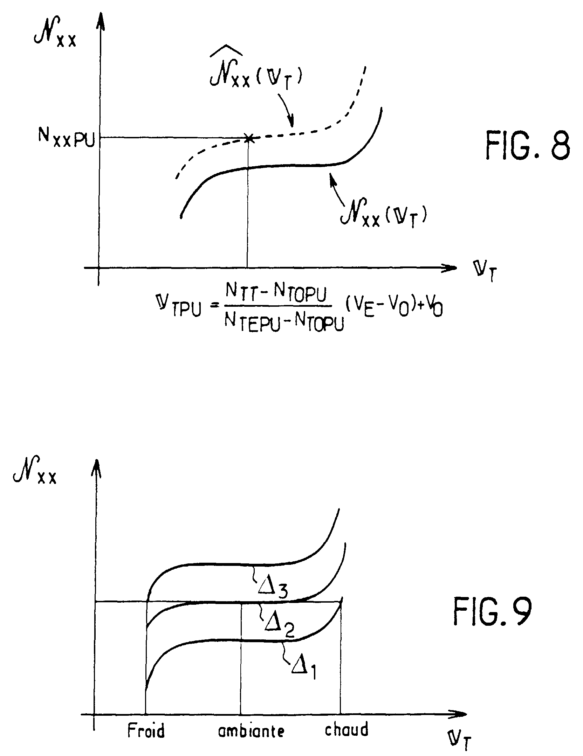

La figure 8 montre, dans un repère de coordonnées $\mathcal{P}_{xx}$ - $\mathbb{V}_T$, le modèle en mémoire

$$\mathcal{P}_{Nxx} \ (\mathbb{V}_T)$$

, et le modèle corrigé

$$\widehat{\mathcal{P}}_{xx} \ (\mathbb{V}_T)$$

dont l'expression est :

$$\widehat{\mathcal{P}}_{xx} \ (\mathbb{V}_T) = \mathcal{P}_{xx} \ (\mathbb{V}_T) - \mathcal{P}_{xx} \ (\mathbb{V}_{TPU}) + N_{xxPU}$$

avec

$$\mathbb{V}_{TPU} = \frac{N_{TT} - N_{TOPU}}{N_{TEPU} - N_{TOPU}} \ (V_E - V_O) + V_O$$

Le décalage entre le modèle en mémoire et le comportement réel du montage peut aussi être dû à des composants effectuant une autocalibration interne au démarrage, dans le but de minimiser leur erreur initiale. Sans le recalage des modèles thermiques de tels composants, lesdits modèles seraient inexploitables de par leur sensibilité à la température de démarrage.

Ce phénomène est mis en relief sur la figure 9 qui montre les variations des valeurs numériques délivrées par les convertisseurs en fonction de l'information de température $\mathbb{V}_T$, dans le cas d'un démarrage :

- à chaud (courbe $\Delta 1$),

- à température ambiante (courbe $\Delta 2$),

- à froid (courbe $\Delta 3$).

Pour corriger ce décalage, on peut utiliser les nouveaux estimateurs de débiaisage des convertisseurs $\widehat{N}_T, \widehat{N}_P, \widehat{\mathbb{V}}_T$ et $\widehat{\mathbb{V}}_P$ qui font intervenir le modèle

$$\widehat{\mathcal{P}}_{xx} \ (\widehat{\mathbb{V}}_T)$$

précédemment défini, ces estimateurs ayant pour expression :

$$\widehat{N}_T = \frac{N_{TT} - \widehat{\mathcal{P}}_{TO} \ (\widehat{\mathbb{V}}_T)}{\widehat{\mathcal{P}}_{TE} \ (\widehat{\mathbb{V}}_T) - \widehat{\mathcal{P}}_{TO} \ (\widehat{\mathbb{V}}_T)} \quad , \ \widehat{N}_P = \frac{N_{PP} - \widehat{\mathcal{P}}_{PO} \ (\widehat{\mathbb{V}}_T)}{\widehat{\mathcal{P}}_{PE} \ (\widehat{\mathbb{V}}_T) - \widehat{\mathcal{P}}_{PO} \ (\widehat{\mathbb{V}}_T)}$$

$$\hat{V}_T = V_O + \hat{N}_T \times (V_E - V_O) \quad , \quad \hat{V}_P = V_O + \hat{N}_P \times (V_E - V_O)$$

En pratique, ce calcul est cyclique de sorte que l'on peut utiliser les relations :

$$\hat{V}_{Ti} = V_O + (V_E - V_O) \times \hat{N}_{Ti}$$

avec

$$\hat{N}_{Ti} = \frac{NTTi - \hat{P}_{TO} (\hat{V}_{T(i-1)})}{\hat{P}_{TE} (\hat{V}_{T(i-1)}) - \hat{P}_{TO} (\hat{V}_{T(i-1)})}$$

et

$$\hat{V}_{TO} = V_{TPU}$$

Pour la modélisation des capteurs, on utilisera les modèles $\mathcal{P}$ et $\mathcal{E}$ en mémoire mais en injectant les variables débiaisées $\hat{V}_P$ et $\hat{V}_T$, soit :

$$\mathcal{P} (\hat{V}_P, \hat{V}_T) \text{ et } \mathcal{E} (\hat{V}_T)$$

Dans le cas où la fonctionnalité du système le permet, ou si l'on dispose d'une voie de substitution, on peut effectuer occasionnellement (phase d'inactivité, coupure courte, etc... ) ou plus régulièrement (autocalibration cyclique) une autre autocalibration.

Cela permet de vérifier le bon fonctionnement du système et, dans le cas où la température a varié depuis la dernière autocalibration, cela permet de vérifier la "qualité" du modèle de compensation thermique mis en oeuvre pour corriger l'électronique et détecter son éventuel vieillissement dudit modèle.

Cela permet ainsi de minimiser à nouveau les erreurs en recalant les modèles mémorisés et le comportement réel, comme cela a été expliqué précédemment.

## Revendications

1. Procédé pour la correction des erreurs thermiques dans un circuit électrique servant à l'acquisition d'un signal électrique représentatif d'une grandeur physique à mesurer et délivrée à la sortie d'un premier capteur (CP) associé à un convertisseur analogique-numérique ($CN_1$), ce circuit électrique comprenant un capteur de température (CT), une première et seconde générateur de tension de référence et un microcontrôleur (MA) équipé d'une mémoire de calibration (MC), le microcontrôleur (MA) commandant une phase de calibration comprenant une pluralité d'étapes de calibration réalisées pour différentes valeurs de température en vue de l'élaboration de la mémorisation d'un modèle de variation thermique, puis une phase opératoire comprenant l'application de la tension de sortie (VP) du premier capteur (CP) à l'entrée du circuit d'acquisition, la mémorisation de cette tension (VP) et la correction de la valeur numérique obtenue grâce au modèle de variation thermique précédemment mémorisé, caractérisé en ce que la phase de calibration s'effectue en usine, préalablement à l'utilisation du circuit électrique, chaque étape de calibration comportant la stabilisation du circuit à une certaine température, l'application à l'entrée du premier convertisseur analogique-numérique respectivement d'un second convertisseur analogique-numérique associé au capteur de température ($CN_1$, $CN_2$) de la première tension de référence (VO) servant à identifier les dérives d'offset, de la seconde tension de référence (VE) servant à identifier les dérives de pleine échelle, de la tension de sortie (VP) du premier capteur (CP) et de la tension de sortie (VT) du capteur de température (CT), puis la détermination et la mémorisation d'un modèle de variation des valeurs numériques desdites tensions (VO, VE, VP, VT), et en ce que le procédé comprend en outre une phase d'initialisation exécutée à chacune des mises en service du circuit d'acquisition, cette phase comprenant :

- le débiaisage de l'offset des convertisseurs ($CN_1$, $CN_2$) par application sur ces convertisseurs de la première tension de référence (VO),
- le débiaisage de la pleine échelle des convertisseurs ($CN_1$, $CN_2$) par application sur ces convertisseurs de la tension de référence (VE), et
- le recalage des différents modèles thermiques en fonction de la température détectée par le capteur de température (CT).

2. Procédé selon la revendication 1,
caractérisé en ce qu'il comprend en outre une autocalibration cyclique au cours de la phase opératoire, chaque phase d'autocalibration comprenant l'application de stimuli à l'entrée du circuit d'acquisition, la détermination, en réponse à ces stimuli, des paramètres caractéristiques de la fonction de transfert du circuit d'acquisition et la détermination de ladite fonction de transfert à partir desdits paramètres et le recalage desdits modèles à partir de l'information de température.

3. Procédé selon la revendication 1,
caractérisé en ce que les stimuli utilisés pour effectuer l'autocalibration consistent en des tensions similaires à celles (VO, VE, VP, VT) utilisées pour déterminer les modèles de variations thermiques.

4. Procédé selon la revendication 1,
caractérisé en ce qu'il comprend en outre la modélisation thermique de composants autocalibrés en interne lors du démarrage.

5. Procédé selon la revendication 1,
caractérisé en ce que les susdites première et seconde tensions de référence (VO) et (VE) sont ratiométriques et sont obtenues à partir de la tension calibrée (V) utilisée par les convertisseurs ($CN_1$, $CN_2$).

6. Procédé selon la revendication 5,
caractérisé en ce que les tensions (VP) et (VT) de même que les susdites tensions de référence (VO) et (VE) sont proportionnelles à la susdite tension calibrée (V).

7. Procédé selon l'une des revendications précédentes,
caractérisé en ce que les différentes valeurs de températures utilisées à chaque cycle de calibration forment des paliers qui s'échelonnent dans le temps d'une façon cyclique entre une température minimale ($T_{min}$) et une température maximale ($T_{max}$) et sont égales à la température ambiante ($T_{amb}$), en début et en fin d'une période ($\Psi$).

8. Procédé selon l'une des revendications précédentes,
caractérisé en ce que la modélisation du circuit d'acquisition comprend en outre une étape de vérification de la cohérence des premier et second convertisseurs ($CN_1$, $CN_2$) en inversant les tensions (VP) et (VT) appliquées aux deux susdits convertisseurs ($CN_1$, $CN_2$).

9. Procédé selon l'une des revendications précédentes,
caractérisé en ce qu'il comprend en outre la modélisation du capteur de température (CT), cette modélisation comprenant lors de la phase préalable, un relevé de la température de référence ($\theta i$) à l'aide d'un thermomètre étalon de manière à créer un modèle ($\zeta(V_T)$) faisant estimation de la température externe.

10. Dispositif pour la correction des erreurs thermiques dans un circuit électrique servant à l'acquisition d'une tension électrique (VP) représentative d'une grandeur physique à mesurer et délivrée par un premier capteur (CP) associé à un convertisseur analogique-numérique ($CN_1$), ce circuit électrique comprenant un capteur de température (CT) une première et seconde générateur de tension de référence et un microcontrôleur (MA) équipé d'une mémoire de calibration (MC), le microcontrôleur (MA) commandant une phase de calibration comprenant une pluralité d'étapes de calibration réalisées pour différentes valeurs de température en vue de l'élaboration de la mémorisation d'un modèle de variation thermique, puis une phase opératoire comprenant l'application de la tension (VP) du premier capteur à l'entrée du circuit d'acquisition, la mémorisation de cette tension (VP) et la correction de la valeur numérique obtenue grâce au modèle de variation thermique précédemment mémorisé,

caractérisé en ce que ladite tension (VP) est appliquée, par l'intermédiaire d'un premier multiplexeur (M1) au premier convertisseur analogique-numérique (CN₁) dont la sortie est reliée à une entrée du microcontrôleur d'acquisition et de traitement (MA) disposant de la mémoire de calibration (MC) et d'une interface de sortie (IS) qui délivre un signal représentatif de la tension (VP), en ce que le microcontrôleur (MA) reçoit en outre le signal numérique élaboré par le deuxième convertisseur analogique-numérique (CN₂) dont l'entrée est connectée au capteur de température (CT) par l'intrmédiaire d'un deuxième multiplexeur (M2), et en ce que chacun des multiplexeurs (M1, M2) comprend des entrées sur lesquelles sont appliquées les tensions de référence (VE, VO).

11. Dispositif selon la revendication 10,

caractérisé en ce que les tensions (VP, VT) délivrées par les capteurs (CP, CT) ainsi que les tensions de référence, sont proportionnelles à une tension calibrée (V) produite par une source (S).

12. Dispositif selon la revendication 11,

caractérisé en ce que les tensions (VO, VE) de référence sont obtenues par un pont de résistance porté à ladite tension calibrée (V).


**Patentansprüche**

1. Verfahren zur Korrektur von Wärmefehlern in einer elektrischen Schaltung zur Erfassung eines elektrischen Signals, das für eine zu messende physikalische Größe repräsentativ ist, die am Ausgang einer ersten Meßsonde (CP) verfügbar ist, die einem Analog-Digital-Wandler (CN1) zugeordnet ist, wobei diese elektrische Schaltung eine Temperatur-Meßsonde (CT), einen ersten und einen zweiten Bezugsspannungsgenerator und ein Mikrokontrollorgan (MA) aufweist, das mit einem Kalibrierspeicher (MC) ausgestattet ist, wobei das Mikrokontrollorgan (MA) eine Kalibrierphase, die mehrere Kalibrierschritte enthält, die für verschiedene Temperaturwerte zur Ausarbeitung eines gespeicherten Wärmevariationsmodells durchgeführt werden, und dann eine Betriebsphase steuert, die das Anlegen der Ausgangsspannung ($V_P$) der ersten Sonde (CP) an den Eingang der Erfassungsschaltung, die Speicherung dieser Spannung ($V_P$) und die Korrektur des mit Hilfe des vorher gespeicherten Wärmevariationsmodells erhaltenen digitalen Werts enthält,

dadurch gekennzeichnet, daß die Kalibrierphase im Werk vor der Benutzung der elektrischen Schaltung stattfindet, wobei jeder Kalibrierschritt die Stabilisierung der Schaltung auf eine bestimmte Temperatur, das Anlegen der ersten Bezugsspannung ($V_O$), die zur Identifizierung der Offset-Abweichungen dient, der zweiten Bezugsspannung ($V_E$), die zur Identifizierung der Maßstabs-Abweichungen dient, der Ausgangsspannung ($V_P$) der ersten Sonde (CP) und der Ausgangsspannung ($V_T$) der Temperatursonde (CT) an den Eingang des ersten Analog-Digital-Wandlers bzw. eines zweiten, der Temperatursonde zugeordneten Analog-Digital-Wandlers (CN1, CN2) und dann die Bestimmung und die Speicherung eines Variationsmodells der digitalen Werte dieser Spannungen ($V_O$, $V_E$, $V_P$, $V_T$) enthält, und daß das Verfahren weiter eine Initialisierungsphase aufweist, die bei jeder Inbetriebnahme der Erfassungsschaltung durchgeführt wird, wobei diese Phase aufweist:

-   die Begradigung (französisch: débiaisage) des Offset der Wandler (CN1, CN2) durch Anlegen der ersten Bezugsspannung ($V_O$) an diese Wandler,
-   die Begradigung des Maßstabs (französisch: pleine échelle) der Wandler (CN1, CN2) durch Anlegen der Bezugsspannung ($V_E$) an diese Wandler,
-   und die Nachjustierung der verschiedenen Wärmemodelle in Abhängigkeit von der von der Temperatursonde (CT) erfaßten Temperatur.

2. Verfahren nach Anspruch 1, dadurch gekennzeichnet, daß es weiter eine zyklische Selbstkalibrierung während der Betriebsphase aufweist, wobei jede Selbstkalibrierungsphase das Anlegen von Stimuli an den Eingang der Erfassungsschaltung, die Bestimmung, als Antwort auf diese Stimuli, der für die Transferfunktion der Erfassungsschaltung charakteristischen Parameter, und die Bestimmung dieser Transferfunktion ausgehend von diesen Parametern und die Nachjustierung der Modelle ausgehend von der Temperaturinformation enthält.

3. Verfahren nach Anspruch 1, dadurch gekennzeichnet, daß die zur Selbstkalibrierung verwendeten Stimuli Spannungen sind, die denen ($V_O$, $V_E$, $V_P$, $V_T$) gleichen, die zur Bestimmung der Wärmevariationsmodelle verwendet werden.

4. Verfahren nach Anspruch 1, dadurch gekennzeichnet, daß es weiter die Wärmemodellbildung von Bauteilen enthält, die beim Starten selbst intern kalibrieren.

**5.** Verfahren nach Anspruch 1, dadurch gekennzeichnet, daß die erste und die zweite Bezugsspannung ($V_O$, $V_E$) ratiometrisch sind und ausgehend von der kalibrierten Spannung (V) erhalten werden, die von den Wandlern (CN1, CN2) benutzt wird.

**6.** Verfahren nach Anspruch 5, dadurch gekennzeichnet, daß die Spannungen ($V_P$) und ($V_T$) und die Bezugsspannungen ($V_O$) und ($V_E$) proportional zur kalibrierten Spannung (V) sind.

**7.** Verfahren nach einem der vorhergehenden Ansprüche, dadurch gekennzeichnet, daß die verschiedenen Temperaturwerte, die bei jedem Kalibrierzyklus verwendet werden, Stufen bilden, die sich in der Zeit zwischen einer minimalen Temperatur ($T_{min}$) und einer maximalen Temperatur ($T_{max}$) zyklisch abstufen und gleich der Umgebungstemperatur ($T_{amb}$) am Anfang und am Ende einer Periode ($\Psi$) sind.

**8.** Verfahren nach einem der vorhergehenden Ansprüche, dadurch gekennzeichnet, daß die Modellbildung der Erfassungsschaltung weiter einen Prüfschritt der Kohärenz des ersten und des zweiten Wandlers (CN1, CN2) durch Umkehr der Spannungen ($V_P$) und ($V_T$) aufweist, die an die beiden Wandler (CN1, CN2) angelegt werden.

**9.** Verfahren nach einem der vorhergehenden Ansprüche, dadurch gekennzeichnet, daß es weiter die Modellbildung der Temperatursonde (CT) aufweist, wobei diese Modellbildung bei der Vorphase eine Messung der Bezugstemperatur ($\theta i$) mit Hilfe eines Eichthermometers enthält, um ein Modell ($\zeta(V_T)$ zu erzeugen, das die Außentemperatur schätzt.

**10.** Vorrichtung zur Korrektur von Wärmefehlern in einer elektrischen Schaltung zur Erfassung einer elektrischen Spannung ($V_P$), die für eine zu messende physikalische Größe repräsentativ ist und von einer ersten Meßsonde (CP) geliefert wird, die einem Analog-Digital-Wandler (CN1) zugeordnet ist, wobei diese elektrische Schaltung eine Temperatur-Meßsonde (CT), einen ersten und einen zweiten Bezugsspannungsgenerator und ein Mikrokontrollorgan (MA) aufweist, das mit einem Kalibrierspeicher (MC) ausgestattet ist, wobei das Mikrokontrollorgan (MA) eine Kalibrierphase, die mehrere Kalibrierschritte aufweist, die für verschiedene Temperaturwerte zur Ausarbeitung der Speicherung eines Wärmevariationsmodells durchgeführt werden, und dann eine Betriebsphase steuert, die das Anlegen der Spannung ($V_P$) der ersten Sonde an den Eingang der Erfassungsschaltung, die Speicherung dieser Spannung ($V_P$) und die Korrektur des mit Hilfe des vorher gespeicherten Wärmevariationsmodells erhaltenen digitalen Werts enthält,
dadurch gekennzeichnet, daß die Spannung ($V_P$) über einen ersten Multiplexer (M1) an den ersten Analog-Digital-Wandler (CN1) angelegt wird, dessen Ausgang mit einem Eingang des Erfassungs- und Bearbeitungs-Mikrokontrollorgans (MA) verbunden ist, das über den Kalibrierspeicher (MC) und eine Ausgangsschnittstelle (IS) verfügt, die ein für die Spannung ($V_P$) repräsentatives Signal liefert, daß das Mikrokontrollorgan (MA) außerdem das digitale Signal empfängt, das vom zweiten Analog-Digital-Wandler (CN2) erarbeitet wird, dessen Eingang mit der Temperatursonde (CT) über einen zweiten Multiplexer (M2) verbunden ist, und daß jeder Multiplexer (M1, M2) Eingänge aufweist, an die die Bezugsspannungen ($V_E$, $V_O$) angelegt werden.

**11.** Vorrichtung nach Anspruch 10, dadurch gekennzeichnet, daß die von den Sonden (CP, CT) gelieferten Spannungen ($V_P$, $V_T$) und die Bezugsspannungen proportional zu einer von einer Quelle (S) erzeugten kalibrierten Spannung (V) sind.

**12.** Vorrichtung nach Anspruch 11, dadurch gekennzeichnet, daß die Bezugsspannungen ($V_O$, $V_E$) durch eine Widerstandsbrücke erhalten werden, die auf die kalibrierte Spannung (V) gebracht wird.

## Claims

**1.** Method for correcting thermal errors in an electric circuit used to acquire an electric signal representative of a physical quantity to be measured, and supplied at the output of a first sensor (CP) associated with an analog-to-digital converter ($CN_1$), this electric circuit comprising a temperature sensor (CT), first and second reference voltage generators and a microcontroller (MA) equipped with a calibration memory (MC), the microcontroller (MA) controlling a calibration phase comprising a plurality of calibration stages performed for different temperature values with a view to memorizing a thermal variation model, then an operational phase comprising the application of the output voltage (VP) of the first sensor (CP) to the input of the acquisition circuit, the memorizing of this voltage (VP) and the correction of the digital value obtained by way of the previously memorized thermal variation model,
characterized in that the calibration phase is performed in the factory prior to utilisation of the electric circuit, each calibration stage comprising the stabilizing of the circuit at a certain temperature, the application, to the input of the first analog-to-digital converter, respectively of a second analog-to-digital converter associated with the temperature sensor ($CN_1$, $CN_2$), of the first reference voltage (VO) serving to identify the offset drifts, of the second reference voltage (VE) serving to identify the full-scale drifts, of the output voltage (VP) of the first sensor (CP) and of the output voltage (VT) of the temperature sensor (CT), then the determining and memorizing of a model of the variation of the digital values of said voltages (VO, VE, VP, VT), and in that the method further comprises an initializing phase performed every time the acquisition circuit is put into operation, this phase comprising:

- the debiasing of the offset of the converters ($CN_1$, $CN_2$) by application of the first reference voltage (VO) to these converters,
- the debiasing of the full scale of the converters ($CN_1$, $CN_2$) by application of the reference voltage (VE) to these converters, and
- the recalibration of the different thermal models as a function of the temperature detected by the temperature sensor (CT).

2. Method as claimed in claim 1,
   characterized in that it further comprises a cyclic self-calibration during the operational phase, each self-calibration phase comprising the application of stimuli to the input of the acquisition circuit, the determination, in response to these stimuli, of the characteristic parameters of the acquisition circuit transfer function, and the determination of said transfer function from said parameters and the recalibration of said models from the temperature data.

3. Method as claimed in claim 1,
   characterized in that the stimuli used to perform self-calibration consist of voltages similar to those (VO, VE, VP, VT) used to determine the thermal variation models.

4. Method as claimed in claim 1,
   characterized in that it further comprises the thermal modelling of the components self-calibrated internally upon start-up.

5. Method as claimed in claim 1,
   characterized in that said first and second reference voltages (VO, VE) are ratiometric and are obtained from the calibrated voltage (V) used by the converters ($CN_1$, $CN_2$).

6. Method as claimed in claim 5,
   characterized in that the voltages (VP) and (VT), like said reference voltages (VO) and (VE), are proportional to said calibrated voltage (V).

7. Method as claimed in any one of the previous claims,
   characterized in that the different temperature values used in each calibration cycle form level stages cyclically staggered over time between a minimum temperature ($T_{min}$) and a maximum temperature ($T_{max}$) and are equal to the ambient temperature ($T_{amb}$) at the start and end of a period ($\Psi$).

8. Method as claimed in any one of the previous claims,
   characterized in that the modelling of the acquisition circuit further comprises a stage checking the consistency of the first and second converters ($CN_1$, $CN_2$) by inverting the voltages (VP) and (VT) applied to said two converters ($CN_1$, $CN_2$).

9. Method as claimed in any one of the previous claims,
   characterized in that it further comprises the modelling of the temperature sensor (CT), this modelling comprising, during the prior phase, a reading of the reference temperature ($\ddot{O}i$) by means of a standard thermometer so as to create a model ($\zeta$ ($V\tau$) estimating the outside temperature.

10. Device for correcting thermal errors in an electric circuit used to acquire an electric voltage (VP) representative of a physical quantity to be measured, and supplied by a first sensor (CP) associated with an analog-to-digital converter ($CN_1$), this electric circuit comprising a temperature sensor (CT), first and second reference voltage generators and a microcontroller (MA) equipped with a calibration memory (MC), the microcontroller (MA) controlling a calibration phase comprising a plurality of calibration stages performed for different temperature values with a view to memorizing a thermal variation model, then an operational phase comprising the application of the output voltage (VP) of the first sensor to the input of the acquisition circuit, the memorizing of this voltage (VP) and the correction of the digital value obtained by way of the previously memorized thermal variation model,
characterized in that said voltage (VP) is applied, via a first multiplexer (M1) to the first analog-to-digital converter ($CN_1$) whose output is connected to an input of the acquisition and processing microcontroller (MA) having the calibration memory (MC) and an output interface (IS) supplying a signal representative of the voltage (VP), and in that the microcontroller (MA) further receives the digital signal generated by the second analog-to-digital converter ($CN_2$) whose input is connected to the temperature sensor (CT) via a second multiplexer (M2), and in that each of the multiplexers (M1, M2) comprises inputs to which the reference voltages (VE, VO) are applied.

11. Device as claimed in claim 10,
characterized in that the voltages (VP, VT) supplied by the sensors (CP, CT), as well as the reference voltages, are proportional to a calibrated voltage (V) generated by a source (S).

12. Device as claimed in claim 11,
characterized in that the reference voltages (VO, VE) are obtained by means of a meter bridge on said calibrated voltage (V).

FIG.1

| Adresse multiplexeur | $A_1$ | $A_0$ | Sortie max P | Sortie max T |
|---|---|---|---|---|
| 0 | 0 | 0 | $V_0$ | $V_0$ |
| 1 | 0 | 1 | $V_E$ | $V_E$ |
| 2 | 1 | 0 | $V_P$ | $V_T$ |
| 3 | 1 | 1 | $V_T$ | $V_P$ |

FIG.2

FIG.3

FIG.4

FIG.5

FIG.6

FIG.7

$\mathcal{N}_{xx}$

$\widehat{\mathcal{N}_{xx}}(\mathbb{V}_T)$

$N_{xxPU}$

**FIG. 8**

$\mathcal{N}_{xx}(\mathbb{V}_T)$

$\mathbb{V}_T$

$$\mathbb{V}_{TPU} = \frac{N_{TT} - N_{TOPU}}{N_{TEPU} - N_{TOPU}}(V_E - V_O) + V_O$$

$\mathcal{N}_{xx}$

$\Delta_3$

**FIG. 9**

$\Delta_2$

$\Delta_1$

Froid     ambiante     chaud
$\mathbb{V}_T$